# EUROPÄISCHE PATENTSCHRIFT

(11) **EP 3 443 837 B1**
(45) Veröffentlichungstag und Bekanntmachung des Hinweises auf die Patenterteilung: **22.07.2020**
(21) Anmeldenummer: 18175681.8
(22) Anmeldetag: 04.06.2018
(51) Int. Cl.: A01G 9/20, A01G 9/24

(54) **FENSTERFIXIERUNG FÜR EINEN FRÜHBEETKASTEN**
WINDOW FIXING FOR A HOTBED
FIXATION DE FENÊTRE POUR UN CHASSIS DE JARDIN

(30) Priorität: 18.08.2017 AT 506902017
(43) Veröffentlichungstag der Anmeldung: 20.02.2019
(73) Patentinhaber: Wüster, Heinrich, 6460 Imst/Tirol (AT)
(72) Erfinder: Wüster, Heinrich, 6460 Imst/Tirol (AT)
(74) Vertreter: Puchberger & Partner Patentanwälte

(56) Entgegenhaltungen:
- CH-A- 160 102
- CH-A- 166 683
- CH-A5- 665 935
- FR-A3- 3 018 155

## Beschreibung

Die Erfindung betrifft eine Fensterfixierung für einen Frühbeetkasten, wobei der Frühbeetkasten einen aus Rahmenstehern und Wänden gebildeten Rahmen und wenigstens ein in einer Schließstellung im Wesentlichen am Rahmen aufliegendes Fenster umfasst und das Fenster durch Bewegen um eine Schwenkachse in wenigstens eine Öffenstellung bringbar ist. Ferner umfasst die Erfindung einen Frühbeetkasten mit einer erfindungsgemäßen Fensterfixierung.

Bekannte Frühbeetkästen sind typischerweise mit Fenstern, vorzugsweise Kunststofffenstern, abgedeckt, die in geschlossenem Zustand die Wärme der Sonnenstrahlung speichern. Dadurch ist es möglich, den im Frühbeet befindlichen Pflanzen ohne zusätzliche Heizung im Vergleich zu einem nicht abgedeckten Beet deutlich verbesserte Witterungsbedingungen zu bieten.

Um die Pflanzen einsetzen, gießen und ernten zu können, sowie um einen Wärmestau bei hohen Temperaturen zu vermeiden, sind die Fenster öffenbar oder sogar komplett aushängbar, um einen noch leichteren Zugang zum Frühbeet zu ermöglichen.

Bei im Stand der Technik bekannten Fenstern die ausgehängt werden können ist das Aushängen und Wiedereinsetzen oft problematisch, da durch ein bei unebenen Bodenverhältnissen auftretendes Verdrehen des Frühbeetrahmens ein genaues Anpassen der Scharnierteile an die vorgesehenen Einsetzöffnungen nur schwer möglich ist. Dazu müsste der Untergrund im Wesentlichen zumindest annähernd eben sein, was in einem Garten üblicherweise nicht der Fall ist. Ferner können ausgehängte und herumliegende Fenster leicht verschmutzen oder beschädigt werden.

Im Stand der Technik sind verschiedene Lösungen zu diesem Problem bekannt. Bei einer Lösung zum Offenhalten gattungsgemäßer Frühbeetabdeckungen wird ein langer Stab eingesetzt, der das Fenster in Öffenstellung fixieren soll. Eine derartige Vorrichtung ist beispielsweise in der CH 665 935 A5 beschrieben. Eine weitere Lösung verwendet Seilfixierungen, die das offen stehende Fenster halten sollen. Wiederum andere Ausführungen verwenden mechanische Rastscheren, wie sie aus dem Möbelbau bekannt sind. Alle genannten Lösungen haben sich nicht durchgesetzt, weil sie einerseits zu unhandlich und sperrig sind (Einsetzen eines Stabes), oder sie andererseits zu labil (Seilfixierung) oder konstruktiv zu aufwendig sind (Möbelschere). Eine Fixierungsvorrichtung mit Federelementen wird in der CH 160 102 A beschrieben. Die CH 166 683 A offenbart eine Fixierungsvorrichtung mit einem Stützorgan, das mehrere Eingriffsöffnungen zum Einführen eines Teils des Fensters aufweist.

Die Aufgabe der vorliegenden Erfindung ist es nun, die beschriebenen Nachteile des Standes der Technik zu überwinden und eine Fensterfixierung für einen Frühbeetkasten zu schaffen, welche einfach zu verwenden und dabei dennoch stabil ist.

Diese und weitere Aufgaben der Erfindung werden dadurch gelöst, dass das Fenster entlang der Schwenkachse verschiebbar ist. Weiters ist erfindungsgemäß eine Ausnehmung in der Fensterfixierung vorgesehen, welche vorzugsweise als Rastnut ausgebildet ist, in die das Fenster zumindest teilweise eingebracht werden kann, wodurch eine formschlüssige Fixierung des Fensters in einer Öffenstellung möglich wird. Das Fenster ist erfindungsgemäß durch eine Verschiebung entlang der Schwenkachse zumindest teilweise in die Rastnut einbringbar.

Das beispielsweise durch Scharniere oder andere Befestigungsmittel am Rahmen drehbar gelagert angebrachte Fenster liegt in seiner Schließstellung im Wesentlichen an der Oberkante des Frühbeetrahmens auf. Wird es in eine Öffenstellung gebracht, kann es durch die erfindungsgemäße Fensterfixierung in einer im Wesentlichen festgelegten Position gehalten werden.

Dazu wird das Fenster in eine an der Fensterfixierung vorgesehene Ausnehmungn vorzugsweise eine Rastnut, eingebracht. Um ein ungehindertes Öffnen des Fensters zu ermöglichen, bevor es seine endgültige Öffenstellung erreicht hat, ist das Fenster seitlich verschiebbar. Dadurch ist es möglich, das Fenster erst wenn es die gewünschte Position erreicht hat in die Ausnehmung an der Fensterfixierung einzuführen. Ferner bedingt diese erfindungsgemäße Ausführung, dass das Fenster beim Öffnen nicht unabsichtlich in eine Ausnehmung eingeführt wird, was möglicherweise zu einer Beschädigung des Fensters führen könnte.

Gemäß einem weiteren erfindungsgemäßen Merkmal kann vorgesehen sein, dass die Rastnut eine Breite aufweist die zumindest teilweise der Dicke des Fensters entspricht, um das Fenster in diese einzuführen.

Ist die Breite der Ausnehmung oder der Rastnut an die Dicke des Fensters angepasst, ist eine möglichst stabile Fixierung des Fensters in der Öffenstellung möglich. Somit kommt es zu keinem Wackeln des Fensters in der Fensterfixierung und beispielsweise bei schlechten Wetterbedingungen, wie etwa starkem Wind, sitzt das Fenster sicher in der Fensterfixierung und ein unbeabsichtigtes Schließen wird verhindert. Es kann gegebenenfalls auch vorgesehen sein, dass das Fenster zumindest in dem Bereich in dem es in die Fensterfixierung eingreift eine Verjüngung oder eine Verbreiterung aufweist.

Gemäß einem weiteren erfindungsgemäßen Merkmal kann vorgesehen sein, dass die Fensterfixierung an einem Rahmensteher, vorzugsweise an einem der im Bereich der Schwenkachse des Fensters liegenden Rahmensteher, angeordnet ist.

Die Rahmensteher bilden die stabilisierenden Teile des Frühbeetrahmens. Um eine stabile Konstruktion der Fensterfixierung bei gleichzeitig geringem Materialbedarf zu ermöglichen, wird diese vorzugsweise in einem bereits sehr stabilen Bereich des Frühbeetrahmens angeordnet. Wird die Fensterfixierung an einem Rahmensteher der sich nahe der Schwenkachse befindet angeordnet, ist weiters eine Reduktion der Größe der Fensterfixierung möglich.

Gemäß einem weiteren erfindungsgemäßen Merkmal kann vorgesehen sein, dass die Fensterfixierung im Wesentlichen viertelkreisförmig oder halbkreisförmig ausgeführt ist und die Rastnut im Wesentlichen radial zum Mittelpunkt des durch die Fensterfixierung gebildeten Viertelkreises oder Halbkreises verläuft.

Dadurch wird eine möglichst platzsparende Konstruktion der Fensterfixierung erreicht. Vorteilhafterweise schließt bei der Verwendung einer viertelkreisförmigen Fensterfixierung diese mit der Hinterseite der Frühbeetrahmens ab, wodurch es zu keinem Überstehen nach hinten kommt.

Gemäß einem weiteren erfindungsgemäßen Merkmal kann vorgesehen sein, dass die Fensterfixierung mehrere winkelig zueinander angeordnete Rastnuten aufweist, welche beispielsweise um etwa 30° zueinander versetzt angeordnet sind.

Sind mehrere Ausnehmungen oder Rastnuten vorgesehen, ist nicht nur die Wahl zwischen einer Schließstellung und einer Öffenstellung möglich. Insbesondere wird die Positionierung des Fensters in mehreren unterschiedlichen Öffenstellungen ermöglicht. Beispielsweise kann das Fenster in einer Öffenstellung nur teilweise offen stehen, sodass ein leichter Luftaustausch stattfinden kann. Bei bereits recht starker Sonneneinstrahlung wird so ein Überhitzen der Pflanzen im Frühbeet verhindert, ohne die wärmespeichernde Wirkung des Fensters komplett zu verlieren. In einer weiteren Öffenstellung kann das Fenster sodann komplett geöffnet werden, wodurch ein Zugang zu dem Pflanzen ermöglicht wird. Weitere versetzt angeordnete Rastnuten erlauben eine noch variablere Einstellung der Luftzufuhr. Sind die Fensterfixierungen in Viertel-oder Halbkreisform ausgebildet, ist die Anordnung von mehreren Rastnuten besonders einfach möglich.

Gemäß einem weiteren erfindungsgemäßen Merkmal kann vorgesehen sein, dass der Mittelpunkt des von der Fensterfixierung gebildeten Viertelkreises oder Halbkreises im Wesentlichen auf der Schwenkachse des Fensters liegt.

Liegt die Schwenkachse des Fensters im Wesentlichen am Mittelpunkt der von der Fensterfixierung gebildeten Viertel- oder Halbkreise, ist eine radiale Anordnung mehrerer Rastnuten besonders einfach möglich. Die Rastnuten besitzen dann im Wesentlichen einen gemeinsamen Ausgangspunkt.

Gemäß einem weiteren erfindungsgemäßen Merkmal kann vorgesehen sein, dass die Fensterfixierung zur außenliegenden Seite des Rahmens beabstandet angeordnet ist.

Gemäß einem weiteren erfindungsgemäßen Merkmal kann vorgesehen sein, dass die Fensterfixierung über ein gekröpftes Verbindungsstück mit dem Rahmen, vorzugsweise mit der Außenseite eines Rahmenstehers verbunden ist.

Dadurch wird insbesondere erreicht, dass das Fenster ungehindert geöffnet werden kann. Vorteilhafterweise ist es mit dieser Ausführungsform der vorliegenden Erfindung möglich, dass das Fenster bis zum Rand des Frühbeetrahmens reicht und diesen somit komplett bedeckt. Ist das Fenster einmal in die gewünschte Position gebracht, kann es in die entsprechende Rastnut eingeführt werden.

Um ein besseres Wachstum der Pflanzen zu gewährleisten, ist eine Abdeckung von Frühbeetkästen mit Fenstern notwendig. Im Stand der Technik bekannte Fensterfixierungen haben die oben beschriebenen Nachteile. Es ist daher eine weitere Aufgabe der Erfindung, einen Frühbeetkasten zu schaffen, welcher die Nachteile von gattungsgemäßen Frühbeetkästen überwindet.

Diese Aufgabe wird dadurch gelöst, dass an einem Frühbeetkasten eine oben beschriebene erfindungsgemäße Fensterfixierung angeordnet wird.

Gemäß einem weiteren erfindungsgemäßen Merkmal kann vorgesehen sein, dass zwei Rahmensteher, zwei Fenster sowie zwei Fensterfixierungen vorgesehen sind, wobei die Fensterfixierungen jeweils an den Außenseiten der Rahmensteher angeordnet sind.

Somit wird die Verwendung eines Fensters, welches die gesamte Breite eines Frühbeets abdeckt ermöglicht. Auch die Abdeckung großer Breiten ist hierdurch möglich, da je ein Teilfenster von einer Fensterfixierung gehalten wird. Jedes Teilfenster wird zum Einbringen in die Rastnuten nach außen geschoben.

Weitere erfindungsgemäße Merkmale ergeben sich aus den Patentansprüchen, den Ausführungsbeispielen, sowie den Figuren.

Im Folgenden wird die Erfindung anhand eines nicht erschöpfenden Ausführungsbeispiels im Detail erläutert.

Dabei zeigen:
Fig. 1: Ein Frühbeet mit zwei öffenbaren Fenstern in Ansicht von vorne;
Fig. 2: Ein Frühbeet mit einem öffenbaren Fenster in seitlicher Ansicht;
Fig. 3: Zwei Frühbeete mit je einem öffenbaren Fenster in seitlicher Ansicht;
Fig. 4a: Eine erfindungsgemäße Fensterfixierung in Detailansicht in seitlicher Ansicht;
Fig. 4b: Eine erfindungsgemäße Fensterfixierung in Detailansicht im Querschnitt.

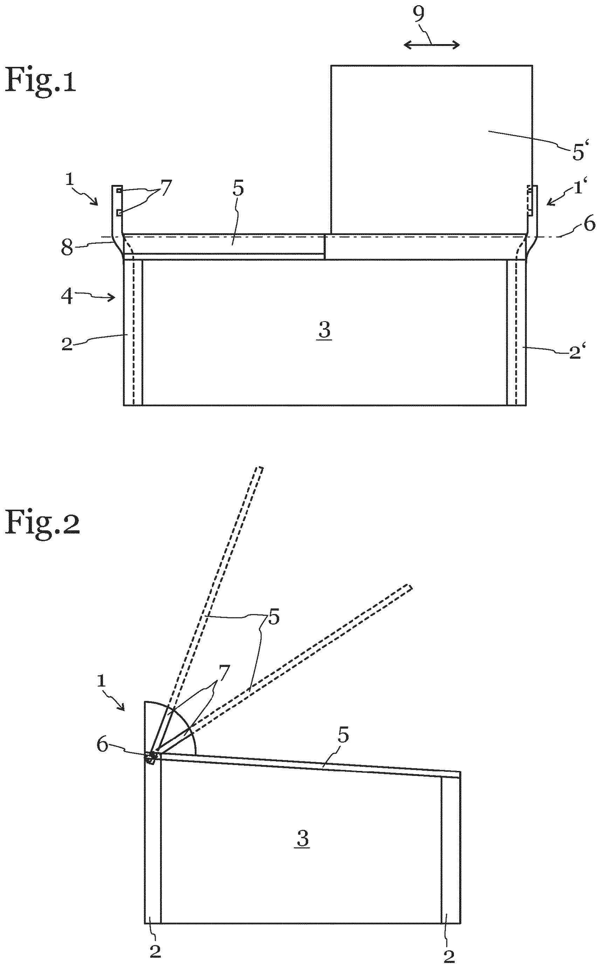

Fig. 1 zeigt ein Frühbeet mit zwei öffenbaren Fenstern 5,5' in einer Ansicht von vorne. Dabei umfasst das gezeigte Frühbeet einen Rahmen 4 und zwei unabhängig voneinander öffenbare Fenster 5,5', sowie zwei Fensterfixierungen 1,1'. Der Rahmen 4 umfasst Rahmensteher 2,2' und eine Wand 3. Die beiden Fenster 5,5' sind mit seitlich verschiebbaren Scharnieren mit dem Rahmen 4 verbunden und um eine Schwenkachse 6 schwenkbar sowie jeweils in einer Verschieberichtung 9 verschiebbar. Die Fensterfixierungen 1,1' sind durch gekröpfte Verbindungsstücke 8 mit den Rahmenstehern 2,2' verbunden. Beide Fensterfixierungen 1,1' weisen je zwei Rastnuten 7 zum Einbringen der Fenster 5,5' auf.

Die Verbindungsstücke 8 rasten in diesem Ausführungsbeispiel in passende Ausnehmungen in den Rahmenstehern 2,2' ein, wodurch eine feste Verbindung gewährleistet wird.

Durch die gekröpften Verbindungsstücke 8 werden die Fensterfixierungen 1,1' soweit nach außen versetzt, dass sie die Fenster 5,5' beim Öffnen nicht behindern. Die Fensterfixierungen 1,1' sind in diesem Ausführungsbeispiel im Wesentlichen viertelfreisförmig und an ihnen sind jeweils zwei Rastnuten 7 ausgebildet. Die Rastnuten 7 verlaufen radial ausgehend vom Mittelpunkt der Viertelkreise, welche im Wesentlichen deckungsgleich mit der Schwenkachse 6 der Fenster 5,5' liegen. Die beiden Rastnuten 7 sind jeweils in einem Winkel von etwa 30° und etwa 80° gemessen an der Oberfläche des Rahmens 4 angeordnet. Sie sind jeweils etwa 20 mm breit, wodurch die Fenster 5,5', welche etwa eine Dicke von 18 mm aufweisen, formschlüssig eingreifen können.

In der Schließstellung liegen die Fenster 5,5' im Wesentlichen komplett an der Oberkante des Rahmens 4 auf. Dadurch wird eine möglichst große Wärmespeicherung im Frühbeet erreicht. Wird die Innentemperatur zu hoch, können beide oder nur ein Fenster 5,5' in eine erste Öffenstellung gebracht werden. Dazu werden die Fenster 5,5' angehoben und wenn die gewünschte Stellung erreicht ist entlang der Verschieberichtung 9 jeweils nach außen verschoben und so in die passende Rastnut 7 zum Halten der Fenster 5,5' eingebracht. Durch den Winkel der ersten Rastnut 7, welcher in diesem Ausführungsbeispiel relativ zur Oberfläche des Rahmens 4 etwa 30° beträgt wird eine ausreichende Belüftung gewährleistet.

Soll im Frühbeet eine Manipulation vorgenommen werden, etwa das Pflanzen von neuen Setzlingen oder das Ernten von Früchten, können ein oder beide Fenster 5,5' in eine zweite Öffenstellung gebracht werden. Durch den relativ zur Oberfläche des Rahmens 4 ausgebildeten Winkel von etwa 80° ist das Fenster fast vollständig geöffnet und ein leichter Zugang zum Frühbeet ist möglich. Selbstverständlich können die Rastnuten 7 in anderen nicht gezeigten Ausführungsbeispielen auch in anderen Winkeln angeordnet sein. In anderen Ausführungsbeispielen können auch nur eine Rastnut 7 oder mehr als zwei Rastnuten 7 an einer Fensterfixierung 1 vorgesehen sein.

In Fig. 1 ist insbesondere gezeigt, dass sich ein Fenster 5' in der zweiten Öffenstellung befindet, während das andere Fenster 5 in Schließstellung ist.

Fig. 2 zeigt ein Frühbeet mit einem öffenbaren Fenster 5 in seitlicher Ansicht. Zu sehen sind zwei Rahmensteher 2 und eine Wand 3, welche den Rahmen 4 des Frühbeets bilden. Ein Fenster 5 ist um eine Schwenkachse 6 schwenkbar gelagert und seitlich verschiebbar am Rahmen 4 befestigt. Seitlich an einem Rahmensteher 2 ist eine viertelkreisförmige Fensterfixierung 1 mit zwei Rastnuten 7 angeordnet, welche durch ein in dieser Ansicht nicht erkennbares gekröpftes Verbindungsstück 8 befestigt wird. In diesem Ausführungsbeispiel erfolgt die Befestigung der Fensterfixierung 1 am Rahmensteher 2 mit Schrauben.

Das in dieser Figur gezeigte Fenster 5 befindet sich in Schließstellung. Schematisch angedeutet sind die Positionen des Fensters 5 in zwei Öffenstellungen, deren Stellungen durch die Rastnuten 7 vorgegeben sind. In diesem Ausführungsbeispiel sind die Rastnuten 7 im Winkel von etwa 45° und etwa 80° relativ zur Schließposition des Fensters 5 angeordnet. Die beiden Rastnuten 7 weisen in diesem Ausführungsbeispiel eine Breite von etwa 11 mm auf. Das Fenster hat hingegen eine Dicke von etwa 10 mm, wodurch es im Wesentlichen formschlüssig in der Rastnut 7 fixierbar ist.

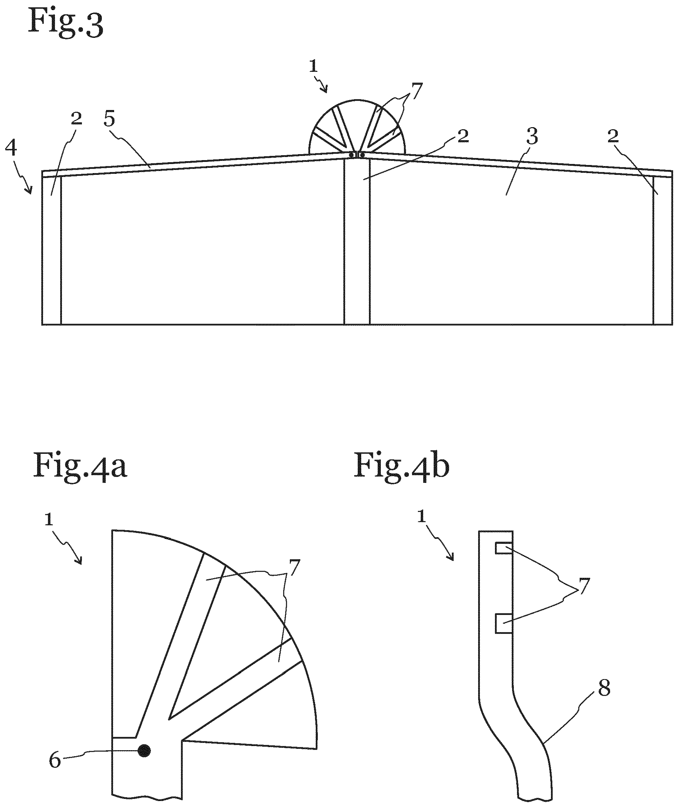

Fig. 3 zeigt ein Frühbeet mit zwei gegenüberliegenden öffenbaren Fenster 5 in seitlicher Ansicht. Die beiden Rahmen 4 der Frühbeete umfassen Rahmensteher 2 und Wände 3. Ebenfalls gezeigt sind zwei Fenster 5 in Schließstellung. In diesem Ausführungsbeispiel wird eine im Wesentlichen halbkreisförmige Fensterfixierung 1 verwendet. Diese ist über gekröpfte Verbindungsstücke 8 direkt mit den Rahmenstehern 4 des Rahmens 2 verbunden. In diesem Ausführungsbeispiel bilden also zwei Rahmensteher 4 mit den über ein Verbindungsstück 8 verbundenen Fensterfixierungen 1 jeweils ein einstückiges Bauteil. Die Fensterfixierung 1 weist vier Rastnuten 7 auf, wobei das Fenster 5 jeder Seite in jeweils zwei dieser Rastnuten 7 einbringbar ist.

Fig. 4a zeigt eine erfindungsgemäße Fensterfixierung 1 in Detailansicht in seitlicher Ansicht. Die gezeigte Fensterfixierung 1 weist zwei Rastnuten 7 auf, welche jeweils eine Breite von etwa 15 mm aufweisen. Damit ist die Breite der Rastnuten 7 im Wesentlichen an die Breite der einzuführenden Fenster 5 angepasst, um eine formschlüssige Verbindung zu ermöglichen. Die Rastnuten 7 der gezeigten Fensterfixierung 1 sind im Winkel von etwa 40° zueinander angeordnet.

Fig. 4b zeigt dieselbe erfindungsgemäße Fensterfixierung 1 wie Fig. 4a im Querschnitt. Zu sehen sind das gekröpfte Verbindungsstück 8 sowie die beiden Rastnuten 7. Das gekröpfte Verbindungsstück 8 dient dabei der Beabstandung der Fensterfixierung 1 vom Rahmen 4, um ein ungehindertes Öffnen und Schließen der Fenster 5 zu gewährleisten.

### Bezugszeichenliste

- 1: Fensterfixierung
- 2: Rahmensteher
- 3: Wand
- 4: Rahmen
- 5: Fenster
- 6: Schwenkachse
- 7: Rastnut
- 8: Verbindungsstück
- 9: Verschieberichtung

## Patentansprüche

1. Fensterfixierung (1) für einen Frühbeetkasten, wobei der Frühbeetkasten einen aus Rahmenstehern (2) und Wänden (3) gebildeten Rahmen (4) und wenigstens ein in einer Schließstellung im Wesentlichen am Rahmen (4) aufliegendes Fenster (5) umfasst und das Fenster (5) durch Bewegen um eine Schwenkachse (6) in wenigstens eine Öffenstellung bringbar ist, wobei die Fensterfixierung (1) das Fenster (5), die Schwenkachse (6) und eine Rastnut (7) umfasst, **dadurch gekennzeichnet, dass** das Fenster (5) entlang der Schwenkachse (6) verschiebbar ist, die Rastnut (7) für das zumindest teilweise Einbringen und formschlüssige Fixieren in der Öffenstellung des Fensters (5) vorgesehen ist, und das Fenster (5) durch eine Verschiebung entlang der Schwenkachse (6) zumindest teilweise in die Rastnut (7) einbringbar ist.

2. Fensterfixierung (1) nach Anspruch 1, **dadurch gekennzeichnet, dass** die Rastnut (7) eine Breite aufweist die zumindest teilweise der Dicke des Fensters (5) entspricht, um das Fenster (5) in diese einzuführen.

3. Fensterfixierung (1) nach Anspruch 1 oder 2, **dadurch gekennzeichnet, dass** die Fensterfixierung (1) an einem Rahmensteher (2), vorzugsweise an einem der im Bereich der Schwenkachse (6) des Fensters (5) liegenden Rahmensteher (2), angeordnet ist.

4. Fensterfixierung (1) nach einem der Ansprüche 1 bis 3, **dadurch gekennzeichnet, dass** die Fensterfixierung (1) im Wesentlichen viertelkreisförmig oder halbkreisförmig ausgeführt ist und die Rastnut (7) im Wesentlichen radial zum Mittelpunkt des durch die Fensterfixierung (1) gebildeten Viertelkreises oder Halbkreises verläuft.

5. Fensterfixierung (1) nach einem der Ansprüche 1 bis 4, **dadurch gekennzeichnet, dass** die Fensterfixierung (1) mehrere winkelig zueinander angeordnete Rastnuten (7) aufweist, welche beispielsweise um etwa 30° zueinander versetzt angeordnet sind.

6. Fensterfixierung (1) nach Anspruch 5, **dadurch gekennzeichnet, dass** der Mittelpunkt des von der Fensterfixierung (1) gebildeten Viertelkreises oder Halbkreises im Wesentlichen auf der Schwenkachse (6) des Fensters (5) liegt.

7. Fensterfixierung (1) nach einem der Ansprüche 1 bis 6, **dadurch gekennzeichnet, dass** die Fensterfixierung (1) zur außenliegenden Seite des Rahmens (4) beabstandet angeordnet ist.

8. Fensterfixierung (1) nach einem der Ansprüche 1 bis 7, **dadurch gekennzeichnet, dass** die Fensterfixierung (1) über ein gekröpftes Verbindungsstück (8) mit dem Rahmen (4), vorzugsweise mit der Außenseite eines Rahmenstehers (2) verbunden ist.

9. Frühbeetkasten mit einer Fensterfixierung (1) gemäß einem der Ansprüche 1 bis 8.

10. Frühbeetkasten nach Anspruch 9, **dadurch gekennzeichnet, dass** zwei Rahmensteher (2, 2'), zwei Fenster (6, 6') sowie zwei Fensterfixierungen (1, 1') vorgesehen sind, wobei die Fensterfixierungen (1, 1') jeweils an den Außenseiten der Rahmensteher (2, 2') angeordnet sind.

## Claims

1. A window fixing (1) for a cold frame, wherein the cold frame comprises a frame (4) composed of frame uprights (2) and walls (3) and at least one window (5) which in a closed position substantially rests on the frame (4) and wherein the window (5) can be brought into at least one open position by movement about a pivot axis (6), wherein the window fixing (1) comprises the window (5), the pivot axis (6) and a locking groove (7),
**characterized in that**,
the window (5) is displaceable along the pivot axis (6), that the locking groove (7) is provided for the at least partial insertion and positive fixing in the open position of the window (5), and that the window (5) can be at least partially inserted into the locking groove (7) by a displacement along the pivot axis (6).

2. The window fixing (1) according to claim 1, **characterized in that** the locking groove (7) has a width which at least partially corresponds to the thickness of the window (5) for inserting the window (5) therein.

3. The window fixing (1) according to claim 1 or 2, **characterized in that** the window fixing (1) is arranged on a frame upright (2), preferably on one of the frame uprights (2) positioned in the region of the pivot axis (6) of the window (5).

4. The window fixing (1) according to one of claims 1 to 3, **characterized in that** the window fixing (1) is substantially quadrant shaped or semicircular and that the locking groove (7) extends substantially radial to the centre of the quadrant or semicircle formed by the window fixing (1).

5. The window fixing (1) according to one of claims 1 to 4, **characterized in that** the window fixing (1) has several locking grooves (7) arranged at an angle to one another, which are offset by about 30° relative to one another, for example.

6. The window fixing (1) according to claim 5, **characterized in that** the centre of the quadrant or semicircle formed by the window fixing (1) lies substantially on the pivot axis (6) of the window (5).

7. The window fixing (1) according to one of claims 1 to 6, **characterized in that** the window fixing (1) is arranged spaced apart from the outer side of the frame (4).

8. The window fixing (1) according to one of claims 1 to 7, **characterized in that** the window fixing (1) is connected to the frame (4), preferably to the outer side of a frame upright (2), by means of a cranked connecting piece (8).

9. A cold frame with a window fixing (1) according to one of claims 1 to 8.

10. The cold frame according to claim 9, **characterized in that** two frame uprights (2, 2'), two windows (6, 6') and two window fixings (1, 1') are provided, the window fixings (1, 1') being arranged on the outer sides of the frame uprights (2, 2').

## Revendications

1. Fixation de fenêtre (1) pour une couche, la couche comprenant un cadre (4) formé de montants de cadre (2) et de parois (3) et au moins une fenêtre (5) qui, dans une position fermée, repose essentiellement sur le cadre (4) et la fenêtre (5) pouvant être amenée dans au moins une position ouverte par un mouvement autour d'un axe de pivotement (6), la fixation de fenêtre (1) comprenant la fenêtre (5), l'axe de pivotement (6) et une rainure de verrouillage (7),
**caractérisée en ce que**
la fenêtre (5) peut être déplacée le long de l'axe de pivotement (6), **en ce que** la rainure de verrouillage (7) est prévue pour l'insertion au moins partielle et la fixation à engagement positif dans la position ouverte de la fenêtre (5), et **en ce que** la fenêtre (5) peut être insérée au moins partiellement dans la rainure de verrouillage (7) par un déplacement le long de l'axe de pivotement (6).

2. Fixation de fenêtre (1) selon la revendication 1, **caractérisée en ce que** la rainure de verrouillage (7) a une largeur qui correspond au moins partiellement à l'épaisseur de la fenêtre (5) afin d'y insérer la fenêtre (5).

3. Fixation de fenêtre (1) selon la revendication 1 ou 2, **caractérisée en ce que** la fixation de fenêtre (1) est disposée sur un montant de cadre (2), de préférence sur l'un des montants de cadre (2) se trouvant dans la zone de l'axe de pivotement (6) de la fenêtre (5).

4. Fixation de fenêtre (1) selon l'une des revendications 1 à 3, **caractérisée en ce que** la fixation de fenêtre (1) est sensiblement en forme de quart de cercle ou de demi-cercle et **en ce que** la rainure de verrouillage (7) s'étend sensiblement radialement jusqu'au centre du quart de cercle ou du demi-cercle formé par la fixation de fenêtre (1).

5. Fixation de fenêtre (1) selon l'une des revendications 1 à 4, **caractérisée en ce que** la fixation de fenêtre (1) présente plusieurs rainures de verrouillage (7) disposées réciproquement en angle, qui sont décalées par exemple d'environ 30° les unes par rapport aux autres.

6. Fixation de fenêtre (1) selon la revendication 5, **caractérisée en ce que** le centre du quart de cercle ou du demi-cercle formé par la fixation de fenêtre (1) se trouve sensiblement sur l'axe de pivotement (6) de la fenêtre (5).

7. Fixation de fenêtre (1) selon l'une des revendications 1 à 6, **caractérisée en ce que** la fixation de fenêtre (1) est disposée à distance du côté extérieur du cadre (4).

8. Fixation de fenêtre (1) selon l'une des revendications 1 à 7, **caractérisée en ce que** la fixation de fenêtre (1) est reliée au cadre (4), de préférence sur le côté extérieur d'un montant de cadre (2), par une pièce de liaison (8) coudée.

9. Couche avec une fixation de fenêtre (1) selon l'une des revendications 1 à 8.

10. Couche selon la revendication 9, **caractérisée en ce que** deux montants de cadre (2, 2'), deux fenêtres (6, 6') et deux fixations de fenêtre (1, 1') sont prévus, les fixations de fenêtre (1, 1') étant disposées sur les côtés extérieurs des montants de cadre (2, 2').
